# EUROPÄISCHE PATENTANMELDUNG

(11) **EP 0 529 327 A1**
(43) Veröffentlichungstag der Anmeldung: **03.03.1993**
(21) Anmeldenummer: 92112836.9
(22) Anmeldetag: 28.07.1992
(51) Int. Cl.: C04B 41/00, F16C 33/04, F16C 33/10, B23K 26/00

(54) **Gebranntes, keramisches Erzeugnis mit strukturierter Oberfläche und Verfahren zu seiner Herstellung**

(30) Priorität: 30.07.1991 DE 4125165
(71) Anmelder: Hoechst CeramTec Aktiengesellschaft, D-95100 Selb (DE)
(72) Erfinder: Benker, Werner, W-8672 Selb (DE); Huber, Jürgen, Dr., W-8672 Selb (DE); Kühn, Heinrich, W-6259 Brechen (DE); Pier, Peter, CH-4310 Rheinfelden (CH)
(74) Vertreter: Hoffmann, Peter, Dipl.-Chem.

(57) **Zusammenfassung**

Bei dem gebrannten keramischen Erzeugnis mit strukturierter Oberfläche als tribologisch beanspruchte Kontaktfläche, besteht die Strukturierung aus einer reproduzierbaren, regelmäßigen Anordnung von gleichförmigen Vertiefungen (1).

## Beschreibung

Die vorliegende Erfindung betrifft ein gebranntes, keramisches Erzeugnis mit strukturierter Oberfläche als trikologisch beanspruchte Kontaktfläche. Die Erfindung betrifft ferner ein Verfahren zur Herstellung eines solchen keramischen Erzeugnisses.

Bei kermaischen Erzeugnissen ist bekannt, daß sich die Ausgestaltung der Oberfläche von tribologisch beanspruchten Kontaktflächen wesentlich auf die Funktion im Einsatz auswirkt. Das gilt besonders für Gleitringdichtungen, Lager, Wellen; Kolben und sonstige rotierende oder in anderer Form bewegte Komponenten in technischen Geräten. Hierzu gehören auch Regelsysteme aus Steuer- und Dichtscheiben in Flüssigkeitsamaturen. Die keramischen Erzeugnisse können aus Werkstoffen der Werkstoffgruppen Aluminiumoxid, Zirkonoxid, Siliziumcarbid und Siliziumnitrid bestehen, aber auch aus silikatkeramischen oder aus anderen sonderkeramischen Werkstoffen.

Solche Kontaktflächen werden z.B. durch mechanische Bearbeitung wie Schleifen, Läppen und/oder Polieren erzeugt und tragen zur Minderung der Reibung bei. Neben isoliert voneinander angeordneten Poren entstehen aber auch solche, die kanalförmig miteinander verbunden sind. Derartige Kontaktflächen verhalten sich bei tribologischer Beanspruchung unbefriedigend; da sie aufgrund der Reibung erhöhte Krähe erfordern, einem Verschleiß stärker unterliegen und im Dauereinsatz nicht in allen Fällen die geforderte Zuverlässigkeit und Wartungsfreiheit erbringen.

Es ist ferner bekannt, daß bei Gleitringdichtungen aus SiSiC die Strukturierung der tribologisch beanspruchten Fläche durch Kohlenstoffpartikel mit einer Korngröße von 0,1 bis 500 µm und in Mengen von 1 bis 45 Gew.-%, bezogen auf die grüne keramische Masse einzulagern und nach dem Brennen durch mechanische Behandlung die Kohlenstoffeinlagerungen in der tribologisch beanspruchten Fläche zu entfernen. Vertiefungen sind willkürlich und lassen sich nicht reproduzierbar herstellen.

Hier will die Erfindung Abhilfe schaffen. Die Aufgabe wird durch Erzeugnisse der gattungsgemäßen Art gelöst, bei denen die Strukturierung aus einer reproduzierbaren, regelmäßigen Anordnung von gleichförmigen Vertiefungen besteht.

Die Strukturierung kann auch aus einer regelmäßigen Anordnung von Vertiefungen bestehen, deren Durchmesser und Tiefe je nach Position auf der Kontaktfläche systematisch verändert sind. Der Flächenanteil der Fläche der Vertiefungen zur strukturierten Fläche kann zwischen 1 und 90 % betragen. Die tribologisch beanspruchten Kontaktflächen können aus strukturierten und unstrukturierten Bereichen bestehen, die in regelmäßigen oder unregelmäßigen Mustern angeordnet sind. Bei einer speziellen Ausführungsform können die strukturierten Bereiche der tribologisch beanspruchten Kontaktfläche aus sichelförmigen Flächen bestehen und spiralförmig auf Ebenen oder gekrümmten Kontaktflächen angeordnet sein. Die tribologisch beanspruchten Kontaktflächen einer Strukturierung können zusammenhängende, linear oder netzartig verbundene Vertiefungen aufweisen. Zur Herstellung der gattungsgemäßen keramischen Erzeugnisse können die zu strukturierende Bereiche der tribologisch beanspruchten Kontaktflächen mit Laser-Strahl behandelt und die Kontaktflächen zum Entfernen von randlichen Überständen um die Vertiefungen mechanisch poliert werden. Zur Erzeugung der Muster können Masken oder EDV-Programme verwendet werden.

Zum Schmelzen bzw. Abtragen des Materials von keramischen Oberflächen eignen sich z.B. CO₂-Laser mit einer Leistung von 10 bis 500 W, bevorzugt von 20 - 80 W. Pulsdauer und Pulslänge werden elektronisch gesteuert, ebenso der Vorschub des Lasers und/oder des Werkstücks. Für Zufallsmuster oder Sondermuster eignet sich eine CNC-Steuerung. Die Vorschubgeschwindigkeit kann 10 bis 200 cm/s, vorzugsweise 30 bis 80 cm/s betragen.
Andere Laser wie z.B. Eximer oder Yag-Laser sind ebenfalls geeignet. Nach dem erfindungsgemäßen Verfahren lassen sich tribologisch beanspruchte Flächen mit individuellen Vertiefungen, d.h. ohne Kanalbildung herstellen. Durch spezifische Muster aus strukturierungsfreien Bereichen, Bereichen mit Strukturierung aus isoliert liegenden Vertiefungen (Poren) und/oder Bereichen mit Strukturierung von andersartiger, z.B. linearer Ausgestaltung, lassen sich die tribologischen Bedingungen an die Art des Mediums (gasförmig, flüssig) und an die Eigenschaften des Mediums (Viskosität, Dampfdruck usw.) anpassen. Für besondere Anwendungen, z.B. Flüssigkeits- oder Gastransport lassen sich aber auch Kanäle herstellen. Alle Vertiefungen lassen sich reproduzierbar erzeugen. Als Werkstoff eignen sich u.a. Aluminiumoxid, Chromoxid, Siliziumcarbid, siliziuminfiltriertes Siliziumcarbid und Siliziumnitrid.

Die Erfindung wird anhand der Figuren näher erläutert.

Es zeigt
- Figur 1: einen mit einem Rauheitsmeßgerät geometrisch vermessenen Ausschnitt einer mit Vertiefungen versehenen Fläche;
- Figur 2: eine ringförmige Fläche mit Mustern aus sichelförmigen Bereichen, die strukturiert sind;
- Figur 3: einen vergrößerten Ausschnitt aus Figur 2;
- Figur 4: den Schnitt IV - IV von Figur 3;
- Figur 5: Ausschnitte aus einer Gleitringdichtung mit unterschiedlichen Vertiefungen und
- Figur 6: einen Schnitt durch eine Gleitringdichtung.

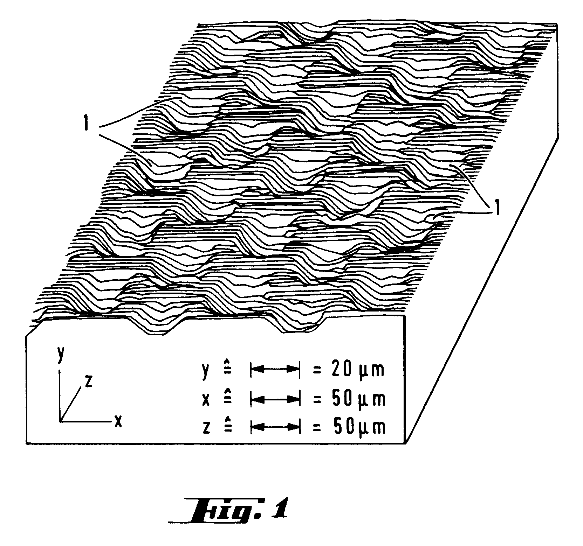

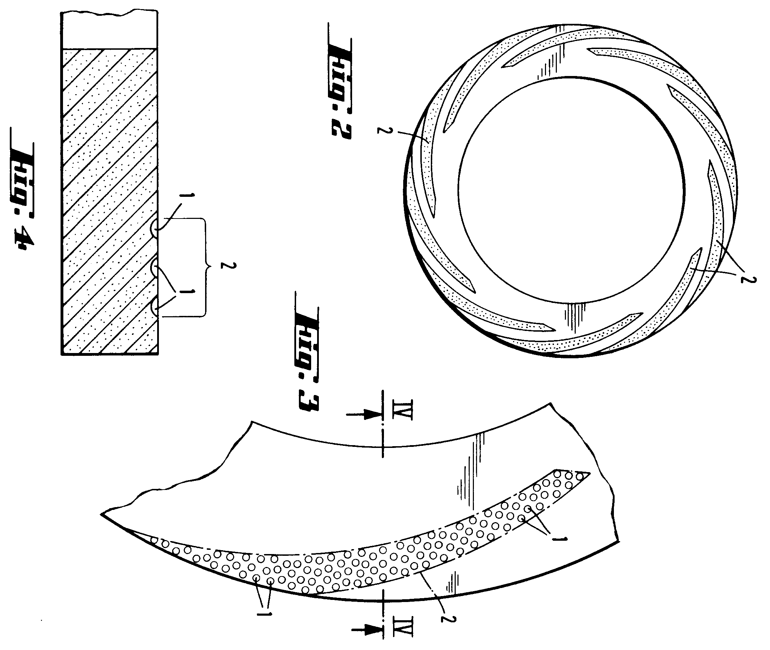

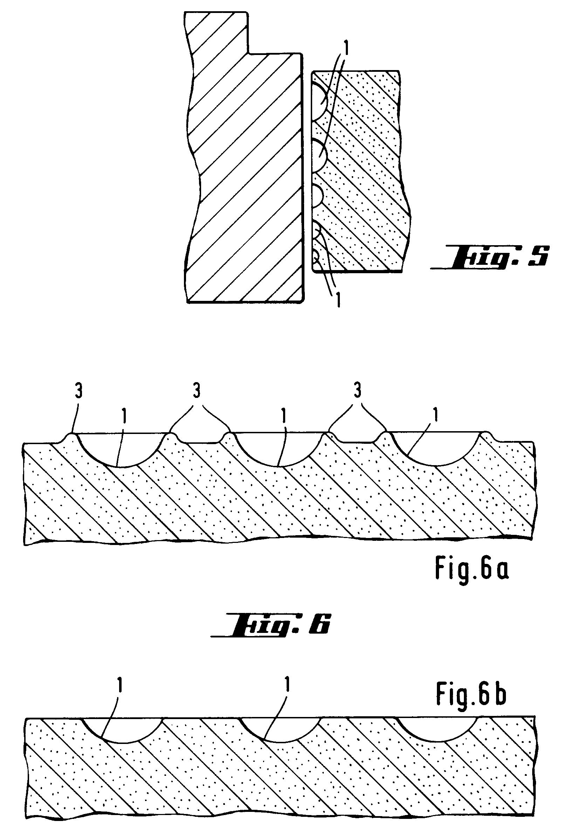

Die Oberfläche gemäß Figur 1 ist poliert (Vertiefungen 1 entgratet). Die Vertiefungen 1 haben einen Durchmesser von ca. 50 µm und eine Tiefe von ca. 20 µm. Bei diesem Muster, bei dem die Vertiefungen 1 versetzt angeordnet sind, kann der Anteil der Vertiefungen an der Gesamtfläche bis 90 % betragen. Die sichelförmigen Bereiche 2 gemäß Figuren 2 und 3 weisen mit Laserlicht erzeugte Vertiefungen 1 auf, deren Kraterwulst 3 (Figur 6a) poliert ist (Figuren 4 und 6b). Gleitringdichtungen mit sichelförmigen Bereichen eignen sich auch zum Abdichten gegen Gase. Durch Variation der Tiefe der Vertiefungen können die Dichtspalte verändert werden, was je nach Druckbeaufschlagung der Dichtung von Vorteil sein kann. Andere regelmäßige Muster, wie Rauten, Dreiecke, Halbmonde, Fischgrätenmuster und dergleichen, bzw. Kombinationen daraus sind ebenfalls möglich.

## Patentansprüche

1. Gebranntes, keramisches Erzeugnis mit strukturierter Oberfläche als tribologisch beanspruchte Kontaktfläche, dadurch gekennzeichnet, daß die Strukturierung aus einer reproduzierbaren, regelmäßigen Anordnung von gleichförmigen Vertiefungen besteht.

2. Gebranntes, keramisches Erzeugnis mit strukturierter Oberfläche als tribologisch beanspruchte Kontaktfläche, dadurch gekennzeichnet, daß die Strukturierung aus einer regelmäßigen Anordnung von Vertiefungen besteht, deren Durchmesser und Tiefe über die Position auf der Kontaktfläche systematisch variiert werden.

3. Kermaisches Erzeugnis nach Anspruch 1 oder 2, dadurch gekennzeichnet; daß der Flächenanteil der Fläche der Vertiefungen zur strukturierten Fläche zwischen 1 % und 90 % beträgt.

4. Keramisches Erzeugnis nach einem der Ansprüche 1 bis 3, dadurch gekennzeichnet, daß die tribologisch beanspruchte Kontaktfläche aus strukturierten und unstrukturierten Bereichen besteht, die in regelmäßigen Mustern angeordnet sind.

5. Keramisches Erzeugnis nach einem der Ansprüche 1 bis 4, dadurch gekennzeichnet, daß die strukturierten Bereiche der tribologisch beanspruchten Kontaktfläche aus sichelförmigen Flächen bestehen und spiralförmig auf ebenen oder gekrümmten Kontaktflächen angeordnet sind.

6. Keramisches Erzeugnis nach einemd der Ansprüche 1 bis 5, dadurch gekennzeichnet; daß mindestens Teile der tribologisch beanspruchten Kontaktfläche eine Strukturierung aus zusammenhängenden, linear oder netzartig verbundene Vertiefungen aufweist.

7. Verfahren zur Herstellung von keramischen Erzeugnissen nach einem der Ansprüche 1 bis 6, dadurch gekennzeichnet, daß die zu strukturierende Oberfläche mit Laser-Strahl behandelt wird.

8. Verfahren zur Herstellung von keramischen Erzeugnissen nach einem der Ansprüche 1 bis 6, dadurch gekennzeichnet, daß die Kontaktfläche nach dem Behandeln mit Laser-Strahl zum Entfernen von randlichen Überständen um die Vertiefungen herum mechanisch poliert werden.

9. Verfahren zum Herstellen von keramischen Erzeugnissen nach Anspruch 4, dadurch gekennzeichnet, daß die Muster mittels Masken erzeugt werden.
